# EUROPÄISCHE PATENTSCHRIFT

(11) **EP 0 850 134 B1**
(45) Veröffentlichungstag und Bekanntmachung des Hinweises auf die Patenterteilung: **30.06.1999**
(21) Anmeldenummer: 96938916.2
(22) Anmeldetag: 23.08.1996
(51) Int. Cl.: B29C 49/04, B29C 49/00, B29C 47/06

(54) **VERFAHREN UND VORRICHTUNGEN ZUM BESCHICHTEN EINES TRÄGERTEILS**
PROCESS AND DEVICES FOR COATING A SUBSTRATE
PROCEDE ET DISPOSITIFS POUR RECOUVRIR UN SUBSTRAT

(30) Priorität: 16.09.1995 DE 19534514
(43) Veröffentlichungstag der Anmeldung: 01.07.1998
(73) Patentinhaber: Möller Plast GmbH, 33649 Bielefeld (DE)
(72) Erfinder: WROBBEL, Werner, D-33335 Gütersloh (DE); VERMEHR, Jochen, D-31737 Rinteln (DE)
(74) Vertreter: Schirmer, Siegfried, Dipl.-Ing.
(86) Internationale Anmeldenummer: DE9601559
(87) Internationale Veröffentlichungsnummer: WO9710094

(56) Entgegenhaltungen:
- EP-A- 0 158 919
- EP-A- 0 385 942
- EP-A- 0 662 385
- EP-A- 0 726 132
- DE-A- 3 623 308
- US-A- 3 257 482
- US-A- 3 343 568
- US-A- 4 937 035
- US-A- 5 156 796
- US-A- 5 221 540

## Beschreibung

Die Erfindung betrifft ein Verfahren zur Herstellung von Formteilen, bei dem ein extrudierter, aus einem Grundmaterial bestehender Vorschlauch in unterschiedlichen Bereichen durch Coextrusion mit einem Beschichtungsmaterial versehen wird und der frisch extrudierte Schlauch anschließend durch Blasformen weiter verformt wird sowie eine entsprechende Vorrichtung zur Durchführung dieses Verfahrens.

Es ist bekannt, einen Trägerteil umlaufend zu beschichten und damit den Trägerteil dem vorgesehenen Verwendungszweck materialmäßig anzupassen. Hierbei besteht der Trägerteil aus einem billigeren Werkstoff und die umlaufende Beschichtung aus einem höherwertigen und damit kostspieligeren Werkstoff. In einer Vielzahl der Fälle ist jedoch die durch die Beschichtung erzielbare neue Eigenschaft, z. B. Verbesserung der Härte, der Resistenz oder Veränderung der Farbe bzw. des Aussehens, nur in einem definierten Bereich des Trägerteils erforderlich. Es wird daher das höherwertige Material in einem Bereich aufgetragen, wo es nicht zwingend erforderlich ist.

Aus dem Dokument EP-A-726,132 ist des weiteren ein Verfahren und eine Vorrichtung zur Herstellung von zur Aufnahme kosmetischer Erzeugnisse dienenden Behältern bekannt, die durch Coextrusion von zwei unterschiedlichen Materialien und anschließendes Blasformen gebildet werden und auf diese Weise mit einem Farbring oder anderen Farbdekoren ausgestattet werden können. Der Coextrusionskopf bildet hier eine erste ringförmige Kammer, in die ein erster Werkstoff extrudiert wird, und eine die erste Kammer umgebende zweite ringförmige Kammer, in die ein zweites Material extrudiert wird. In der Wand zwischen der ersten und zweiten Kammer ist eine Öffnung vorgesehen, über die das zweite Material während der Translations- und/oder Drehbewegung des ersten Materials auf dieses aufgebracht wird. Auf diese Weise können umlaufende oder entsprechend der Translations- oder Rotationsbewegung und der Lange des Spaltes zwischen den beiden Zylinderkammern Behälter mit auf deren Oberfläche angebrachten, unterschiedlich geformten Dekoren hergestellt werden. Nach dieser bekannten Lehre sollen also dekorative Verpackungsbehältnisse hergestellt werden, so daß gegenüber der der vorliegenden Erfindung zugrundeliegenden Zielstellung wesentliche Unterschiede gegeben sind.

Der Erfindung liegt die Aufgabe zugrunde, ein beschichtetes Trägerteil kostengünstiger herzustellen ohne Beeinträchtigung der für den jeweiligen Anwendungsfall erforderlichen Eigenschaften.

Diese Aufgabe wird erfindungsgemäß dadurch gelöst, daß bei der Coextrusion der beschichtete Umfangsbereich hinsichtlich seines Zentriwinkels und der Stärke der Beschichtung mit Hilfe eines einstellbaren Verteilerelements eingestellt wird. In Ausgestaltung der Erfindung wird die Extrusion des Grundmaterials und des Beschichtungsmaterials mit unterschiedlichen Geschwindigkeiten durchgeführt, wobei das Aufbringen der Beschichtung in unterschiedlichen Bereichen des Vorschlauchs mit mehreren Extrusionsvorrichtungen vorgenommen wird.

Bei einer zur Durchführung des Verfahrens dienenden Vorrichtung, die aus einer ersten Extrusionsvorrichtung mit einem ersten Verteilermittel zur Ausbildung des Vorschlauchs und einer zweiten Extrusionsvorrichtung mit einem an das erste Verteilerelement angeschlossenen zweiten Verteilermittel zum Aufbringen des Beschichtungsmaterials auf den Vorschlauch besteht, ist das zweite Verteilermittel aus einzelnen, im bezug auf die Linksachse des Vorschlauchs radial einstellbaren Segmenten zum Auftragen des Beschichtungsstoffs in einem durch die Segmentstellung bestimmten veränderlichen Umfangsbereich und einer entsprechenden Stärke gebildet. Es besteht die Möglichkeit, zur radialen Verstellung der beiden Segmente Stellschrauben vorzusehen, wobei die Segmente zur Variation der Schichtdicke über den Umfangsbereich einer Beschichtungsfläche mit Profilierungen versehen sein können. Vorteilhafterweise ist das erste Verteilermittel drehbar angeordnet. Es besteht auch die Möglichkeit, mehrere zweite Extrusionsvorrichtungen zur Zuführung eines Beschichtungsmaterials vorzusehen.

Ein Ausführungsbeispiel einer erfindungsgemäßen Vorrichtung zur Durchführung des Verfahrens ist in der Zeichnung dargestellt. Es zeigen:

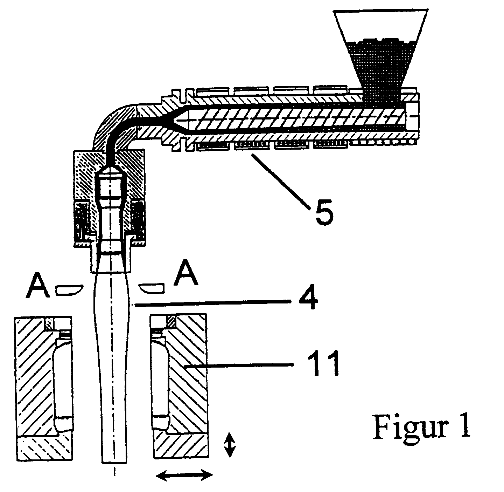

- Fig. 1: einen Längsschnitt durch eine bekannte Extrudereinheit mit Blasform in schematischer Darstellung;

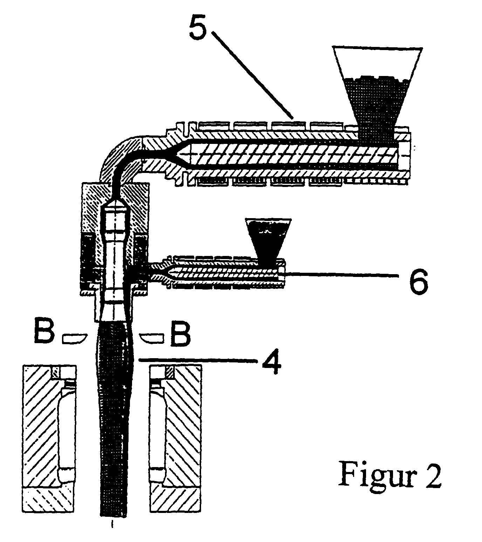

- Fig. 2: wie Fig. 1, jedoch mit zugeordnetem 2. Extruder und Vorschlauch mit segmentierter Beschichtung;

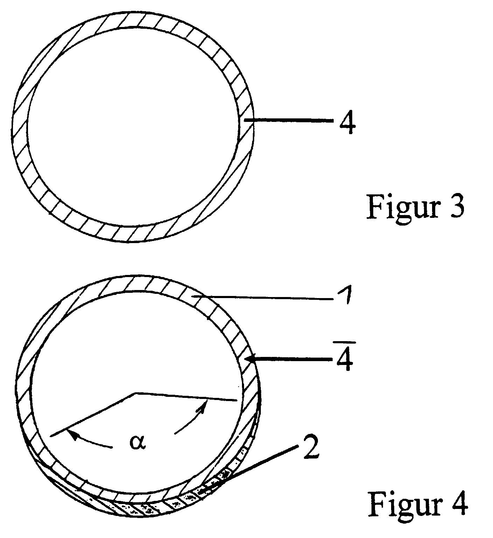

- Fig. 3: einen Schnitt nach Linie A - A der Fig. 1;
- Fig. 4: einen Schnitt nach Linie B - B der Fig. 2 und
- Fig. 5: einen Längsschnitt durch ein Verteilerelement mit anschließenden Werkteilen in vergrößerter Darstellung.

Von einem 1. Extruder 5 wird der Trägerwerkstoff 1 in den Vorschlauch 4 geblasen. Der Vorschlauch 4 ist in einem zu öffnenden Werkzeug 11 geführt. Über einen 2. Extruder 6 wird der Beschichtungswerkstoff 2 in den Vorschlauch 4 in einem vorgegebenen Winkelbereich α = 145° zur Horizontalachse des Vorschlauchs 4 über ein Verteilerelement 7 eingeblasen. Die beiden Werkstoffe 1; 2 werden mit unterschiedlicher Einspeisgeschwindigkeit in den Vorschlauch 4 eingebracht.

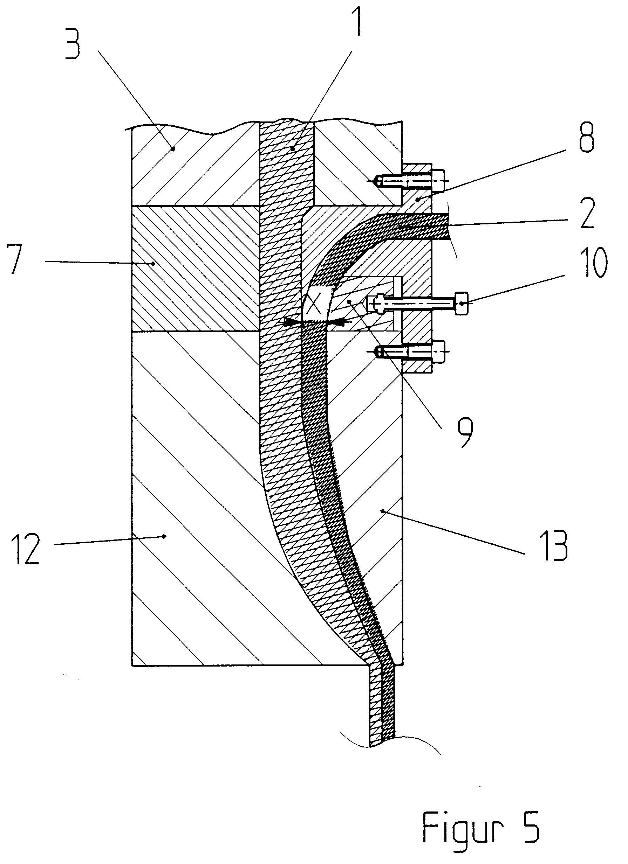

Das Verteilerelement 7 ist unterhalb des Verteilerkopfs 3 angeordnet, der mit einem Anschluß 8 für den 2. Extruder 6 versehen ist. Zur Veränderung des Winkelbereichs α für den Beschichtungswerkstoff 2 weist das Verteilerelement 7 verstellbare Segmente g auf. Zur Verstellung dieser Segmente 9 dienen von außen zugängliche Stellschrauben 10. Die Segmente 9 sind um das in Figur 5 eingezeichnete Maß X horizontal verschiebbar. Der Kern ist mit 12 und die Düse mit 13 bezeichnet.

### Aufstellung der Bezugszeichen:

- 1: Trägerwerkstoff
- 2: Beschichtungswerkstoff
- 3: Verteilerkopf
- 4: Vorschlauch
- 5: 1. Extruder
- 6: 2. Extruder
- 7: Verteilerelement
- 8: Anschluß
- 9: Segmente
- 10: Stellschraube
- 11: Werkzeug
- 12: Kern
- 13: Düse
- α: Winkelbereich

## Patentansprüche

1. Verfahren zur Herstellung von Formteilen, bei dem ein extrudierter, aus einem Grundmaterial bestehender Vorschlauch in unterschiedlichen Bereichen durch Coextrusion mit einem Beschichtungsmaterial versehen wird und der frisch extrudierte Schlauch anschließend durch Blasformen weiterverformt wird, dadurch gekennzeichnet, daß bei der Coextrusion der beschichtete Umfangsbereich hinsichtlich seines Zentriwinkels und der Stärke der Beschichtung mit Hilfe eines einstellbaren Verteilerelements eingestellt wird.

2. Verfahren nach Anspruch 1, dadurch gekennzeichnet, daß die Extrusion des Grundmaterials und des Beschichtungsmaterials mit unterschiedlichen Geschwindigkeiten durchgeführt wird.

3. Verfahren nach Anspruch 1 oder 2, dadurch gekennzeichnet, daß das Aufbringen der Beschichtung in unterschiedlichen Bereichen des Vorschlauchs mit mehreren Extrusionsvorrichtungen vorgenommen wird.

4. Vorrichtung zur Durchführung des Verfahrens nach einem der Ansprüche 1 bis 3, bestehend aus einer ersten Extrusionsvorrichtung (5) mit einem ersten Verteilermittel (3) zur Ausbildung des Vorschlauchs und einer zweiten Extrusionsvorrichtung (6) mit einem an das erste Verteilermittel (3) angeschlossenen zweiten Verteilermittel (7) zum Aufbringen des Beschichtungsmaterials auf den Vorschlauch (4), dadurch gekennzeichnet, daß das zweite Verteilermittel (7) aus einzelnen, in Bezug auf die Längsachse des Vorschlauchs (4) radial einstellbaren Segmenten (9) zum Auftragen des Beschichtungsstoffs in einem durch die Segmentstellung bestimmten veränderlichen Umfangsbereich und einer entsprechenden Stärke gebildet ist.

5. Vorrichtung nach Anspruch 4, dadurch gekennzeichnet, daß zur radialen Verstellung der einzelnen Segmente (9) Stellschrauben (10) vorgesehen sind.

6. Vorrichtung nach Anspruch 4 oder 5, dadurch gekennzeichnet, daß die Segmente (9) zur Variation der Schichtdicke über der Umfangsbereich einer Beschichtungsfläche mit Profilierungen versehen sind.

7. Vorrichtung nach Anspruch 4, dadurch gekennzeichnet, daß das erste Verteilermittel (3) drehbar angeordnet ist.

8. Vorrichtung nach Anspruch 4, dadurch gekennzeichnet, daß mehrere zweite Extrusionsvorrichtungen (6) zur Zuführung eines Beschichtungsmaterials vorgesehen sind.

## Claims

1. Method for the production of moulded parts, in which method an extruded hose blank consisting of a base material is provided with a coating material in different regions by co-extrusion and the freshly extruded hose is subsequently deformed further by blow-moulding, characterised in that the circumferential region coated during the co-extrusion is set with regard to its subtended angle and the thickness of the coating with the aid of an adjustable distributor element.

2. Method according to claim 1, characterised in that the extrusion of the base material and of the coating material are performed at different speeds.

3. Method according to claim 1 or 2, characterised in that the application of the coating in different regions of the hose blank is undertaken with several extruder devices.

4. Device for the performance of the method according to one of the claims 1 to 3, the device consisting of a first extruder device (5) with a first distributing means (3) for the formation of the hose blank and a second extruder device (6) with a second distributing means (7), which is connected to the first distributing means (3), for the application of the coating onto the hose blank (4), characterised in that the second distributing means (7) is formed of individual segments (9), which are settable radially with respect to the longitudinal axis of the hose blank (4), for the application of the coating material in a variable circumferential region determined by the setting of the segment and an appropriate thickness.

5. Device according to claim 4, characterised in that setting screws (10) are provided for the radial adjustment of the individual segments (9).

6. Device according to claim 4 or 5, characterised in that the segments (9) are provided with profiles for variation of the layer thickness over the circumferential region of a coating surface.

7. Device according to claim 4, characterised in that the first distributing means (3) is arranged to be rotatable.

8. Device according to claim 4, characterised in that several second extruder devices (6) are provided for the feed of a coating material.

## Revendications

1. Procédé de fabrication de pièces moulées, dans lequel une ébauche de tuyau, constituée d'un matériau de base, est doté dans des zones différentes par coextrusion d'un matériau de revêtement, et le tuyau fraîchement extrudé étant ensuite soumis à une continuation du formage par soufflage-moulage,
caractérisé en ce que
lors de la coextrusion de la zone périphérique revêtue, du point de vue de son angle au centre et de l'épaisseur du revêtement, un réglage est effectué à l'aide d'un élément distributeur réglable.

2. Procédé selon la revendication 1,
caractérisé en ce que
l'extrusion du matériau de base et du matériau de revêtement est effectuée à des vitesses différentes.

3. Procédé selon la revendication 1 ou 2,
caractérisé en ce que
l'application du revêtement dans des zones différentes du tuyau d'ébauche est effectuée avec plusieurs dispositifs d'extrusion.

4. Dispositif de mise en oeuvre du procédé selon l'une des revendications 1 à 3,
constitué d'un premier dispositif d'extrusion (5), équipé d'un premier moyen distributeur (3) pour constituer le tuyau d'ébauche, et d'un deuxième dispositif d'extrusion (6), équipé d'un deuxième moyen distributeur (7) raccordé au premier moyen distributeur (3), pour appliquer le matériau de revêtement sur le tuyau d'ébauche (4),
caractérisé en ce que
le deuxième moyen distributeur (7) est constitué de segments individuels (9) réglables radialement par rapport à l'axe longitudinal de l'ébauche de tuyau (4), pour appliquer le matériau de revêtement dans une zone périphérique modifiée, déterminée par la division en segments et avec une épaisseur correspondante.

5. Dispositif selon la revendication 4,
caractérisé en ce que
des vis de réglage (10) sont prévues pour assurer le réglage radial des différents segments (9).

6. Dispositif selon la revendication 4 ou 5,
caractérisé en ce que
les segments (9) sont dotés de profilages pour assurer la variation de l'épaisseur de couche sur la valeur de la zone périphérique d'une surface de revêtement.

7. Dispositif selon la revendication 4,
caractérisé en ce que
le premier moyen distributeur (3) est disposé de façon à pouvoir tourner.

8. Dispositif selon la revendication 4,
caractérisé en ce
que plusieurs deuxièmes dispositifs d'extrusion (6) sont prévus pour assurer l'amenée d'un matériau de revêtement.
